# EUROPEAN PATENT APPLICATION

(11) **EP 0 769 645 A1**
(43) Date of publication of application: **23.04.1997**
(21) Application number: 96116286.4
(22) Date of filing: 11.10.1996
(51) Int. Cl.: F16K 31/40

(54) **Proportional valve**

(30) Priority: 17.10.1995 US 544326
(71) Applicant: HONEYWELL INC., Minneapolis Minnesota 55408 (US)
(72) Inventor: Retynsky, Victor, Tolland, CT 06084 (US)
(74) Representative: Rentzsch, Heinz, Dipl.-Ing.

(57) **Abstract**

A proportional valve has a main orifice seal (35) attached to a diaphragm (24) that is disposed within a valve body (10) to separate a first cavity (18) from a second cavity (20). A fluid passage (36, 38, 40) is provided through the main orifice seal (35) to selectively connect the second cavity (20) in fluid communication with the outlet port (14). Movement of a solenoid plunger (52) causes a pilot orifice seal (44) to move relative to a pilot orifice (36). This movement permits fluid to flow from the second cavity (20) toward the outlet port (14) of the valve through a conduit provided through the main orifice seal structure (35). The fluid flowing through the valve is proportional to the magnitude of current flowing through the solenoid coil (50).

## Description

The present invention is related to a proportional valve with a diaphragm that separates two cavities and supports a main orifice seal which is movable relative to a main orifice in response to the position of a pilot orifice sealing device that controls the flow of fluid through the main orifice sealing device.

In certain valve applications it is desirable to control the rate of fluid flow through the valve by changing an electrical signal provided to the valve. Valves of this type can use a solenoid actuator that moves a plunger in response to changes in the electrical current flowing through a solenoid coil.

US-A 5,294,089 discloses a proportional flow valve in which inlet fluid pressure urges the valve member toward a valve seat. A pressure member, which can be a piston, has an effective area substantially larger than that of the valve member and is also selectively subjected to inlet fluid pressure to urge the valve member away from the valve seat so as to open the valve and keep it open. A solenoid actuator determines the position of a pilot valve member which controls the flow of inlet fluid to the pressure member and hence controls the location of the pressure member and the spacing of the valve member from the valve seat. The position of the pilot valve member and hence the spacing of the valve member from the valve seat is proportional to the amount of electric current applied to the actuator.

US-A 4,921,208 describes another proportional flow valve. The pressure member, which can be a rolling diaphragm, has an effective area approximately equal to that of the valve orifice and is also subjected to inlet fluid pressure when the valve is opened to counterbalance the force of the inlet fluid pressure on the valve member. A spring constantly urges the valve member toward the valve seat to close the valve and a solenoid actuator when energized moves the valve member away from the valve seat against the force of the spring. The distance which the valve member moves from the seat and hence the rate of flow through the valve is proportional to the amount of current applied to the solenoid actuator. A pilot valve controls the flow of inlet fluid pressure to the pressure member.

US-A 5,374,029 discloses a solenoid flow control valve and frictionless plunger assembly. This comprises a seat member that is located within a chamber and defines a mouth of a first flow port. A plunger is longitudinally positionable between a first plunger position, in sealing engagement with the seat member, and a second plunger position spaced from the seat member. A selectively operable magnetic component has a core spool member with a second flow port extending therethrough. Two disc springs radially extend from the plunger to the valve body. A pole piece is provided which has a base portion that is affixed to the valve body and a flux receiving portion positioned between the selective operation of the electromagnetic component moves the plunger toward the core spool member to the second plunger position to form a magnetic circuit through the plunger, the pole piece, the valve body and the core spool member.

The invention as characterized in claim 1 provides an improved proportional valve of the type as mentioned above. Prefered embodiments and details of the invention are described in the dependent claims.

A proportional valve made in accordance with the preferred embodiment of the present invention comprises a valve body having an inlet port and an outlet port and a first cavity, within the valve body, that is connected in fluid communication with the inlet port. In addition, the valve body comprises a second cavity and a flexible diaphragm disposed between the first and second cavities. The diaphragm is provided with a bleed hole extending through it and connecting the first and second cavities in fluid communication with each other. A main orifice is provided for connecting the first cavity in fluid communication with the outlet port. When the main orifice is unsealed, the inlet and outlet ports are connected in fluid communication with each other. The proportional valve also comprises a first means for sealing the main orifice and preventing fluid flow between the first cavity and the outlet port. The first sealing means is attached to the diaphragm for movement with the diaphragm along a first axis relative to the main orifice. A pilot orifice extends through the first sealing means for connecting the second cavity in fluid communication with the outlet port. A second sealing means is provided for sealing the pilot orifice and preventing fluid flow between the second cavity and the outlet port. The second sealing means is movable relative to the first sealing means. In addition, the proportional valve of the present invention comprises a means for causing the second sealing means to move relative to the first sealing means.

In a particularly preferred embodiment of the present invention, the valve further comprises a means for limiting the movement of the first sealing means to a path along the first axis. The causing means can be a solenoid coil and the second sealing means can be attached to a plunger that is disposed for movement within solenoid coil. A preferred embodiment of the present invention further comprises a first means for urging the first sealing means against the main orifice to prevent fluid flow between the first cavity and the outlet port. This first urging means can be a main orifice spring. The valve made in accordance with a particularly preferred embodiment of the present invention further comprises a second means for urging the second sealing means against the pilot orifice to prevent flow between the second cavity and the outlet port. This second urging means can be a plunger spring.

### BRIEF DESCRIPTION OF THE DRAWINGS

The present invention will be more fully and completely understood from a reading of the Description of the Preferred Embodiment in conjunction with the drawings, in which:
Figure 1 shows the present invention in a closed condition;
Figure 2 shows the present invention after the solenoid plunger has initially moved away from the main orifice seal; and
Figure 3 shows the present invention after the main orifice seal and its first sealing means structure responds to the pressure differentials caused by the movement of the plunger as represented in Figure 2.

### DESCRIPTION OF THE PREFERRED EMBODIMENT

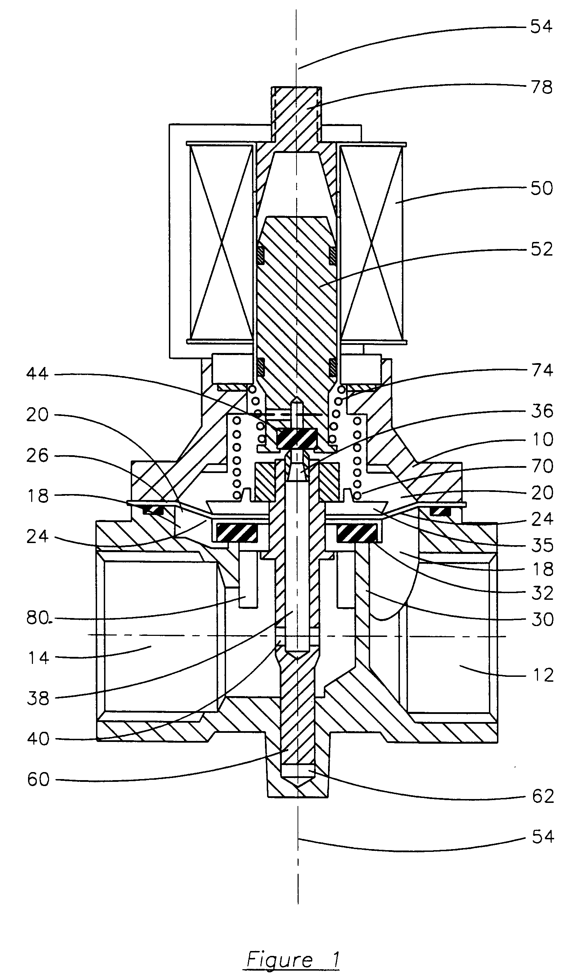

Throughout the Description of the Preferred Embodiment, like components will be identified by like reference numerals. Figure 1 is a cross sectional view of a proportional valve made in accordance with the principles of the present invention. A valve body 10 is provided with an inlet port 12 and an outlet port 14. A first cavity 18 and a second cavity 20 are contained within the valve body 10 and separated from each other by a diaphragm 24. The diaphragm can be flexible and attached, at its periphery, to the valve body or, alternatively, it can be a rigid piston-like structure slideably disposed within the valve body. The diaphragm 24 is disposed between the first cavity 18 and the second cavity 20. A bleed hole 26 is formed through the diaphragm 24 to permit a preselected rate of fluid flow between the first and second cavities. A main orifice 30 is associated with a main orifice seal 32. As shown in Figure 1, the main orifice seal 32 is attached to the diaphragm 24. The main orifice 30 connects the first cavity 18 in fluid communication with the outlet port 14 and the main orifice seal 32 is positioned to prevent fluid flow between the first cavity 18 and the outlet port 14 when the main orifice seal 32 is in the position shown in Figure 1 against the crest of the main orifice 30. The combination of the main orifice seal 32 and the structure to which it is attached is referred to herein as the first sealing means 35. A pilot orifice 36 is provided to permit fluid flow through the conduit 38 and opening 40. This fluid passage extends through the first sealing means 35 and connects the second cavity 20 in fluid communication with the outlet port 14. A second sealing means 44 is provided for sealing the pilot orifice 36 and preventing fluid flow between the second cavity 20 and the outlet port 14 when the second sealing means 44 is disposed against the pilot orifice 36 as shown in Figure 1. The second sealing means 44 is movable relative to the first sealing means.

With continued reference to Figure 1, the proportional valve also comprises a solenoid coil 50 that can cause the plunger 52 to move along axis 54 in response to an electrical current flowing through the solenoid coil 50. The second sealing means 44 is attached to the plunger 52 and is therefore movable relative to the first sealing means 35 along the axis 54.

In a preferred embodiment of the present invention, the first sealing means 35 is attached to a spindle 60 that is disposed within an opening 62 of the valve body 10. The spindle 60 and alignment sleeve 80 assist in aligning the movement of the first sealing means to a path along the axis 54. The main orifice spring 70 urges the first sealing means downward toward the main orifice 30 and urges the main orifice seal 32 against the crest of the main orifice 30. In addition, a plunger spring 74 urges the plunger 52 in a downward direction in opposition to the force that can be provided by the magnetic attraction between the plunger 52 and the stop 78 caused by an electrical current flowing through the solenoid coil 50. An alignment sleeve 80 is attached to the first sealing means. The alignment sleeve 80 performs several functions. First, it is shaped to move along axis 54 within the main orifice 30 and assist in keeping the main orifice seal 32 aligned with the main orifice crest. In addition, radial openings in the alignment sleeve 80 permit fluid flow between the first cavity 18 and the outlet port 14 when the first sealing means 35 is raised upward from the crest of the main orifice 30.

When the plunger 52 is in its downward position as shown in Figure 1, the second sealing means 44 blocks the pilot orifice 36 and prevents any flow through the conduits 38 and 40. The main orifice seal 32 is pressed against the crest of the main orifice 30 and flow is prevented between the first cavity 18 and the outlet port 14. The pressure within the first cavity 18 is equal to the pressure at the inlet port 12. Because of the bleed hole 26 through the diaphragm 24, the pressure in the second cavity 20 is equal to the pressure in the first cavity 18 when the main orifice is blocked. Since the pressure of the second cavity 20, which is generally equal to the pressure at the inlet port 12, is applied over the entire upper surface of the diaphragm 24 and the first sealing means, a net force is exerted downward on the first sealing means because a portion of the underside of the first sealing means is exposed to the much lower pressure of the outlet port 14. The pressure differential exerts a downward force on the main orifice seal 32 which is pressed against the crest of the main orifice 30. In addition to the force created by this pressure differential, the main orifice spring 70 exerts a downward force on the first sealing means. Furthermore, the plunger spring 74 exerts a downward force on the plunger 52 which, in turn, exerts a force against the pilot orifice 36 and its attached structure of the first sealing means 35. When the valve is in the configuration shown in Figure 1, no flow exists between the inlet port 12 and the outlet port 14.

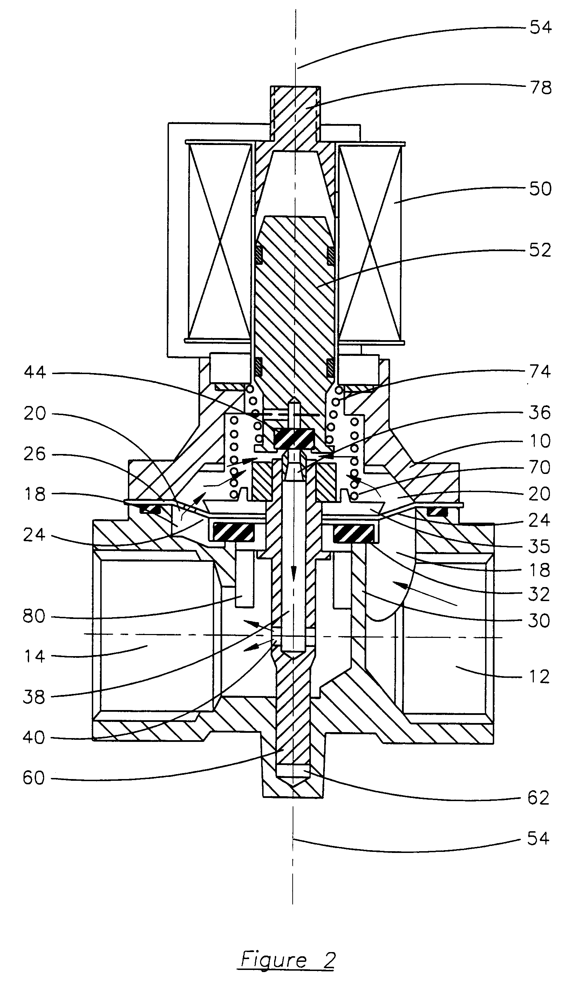

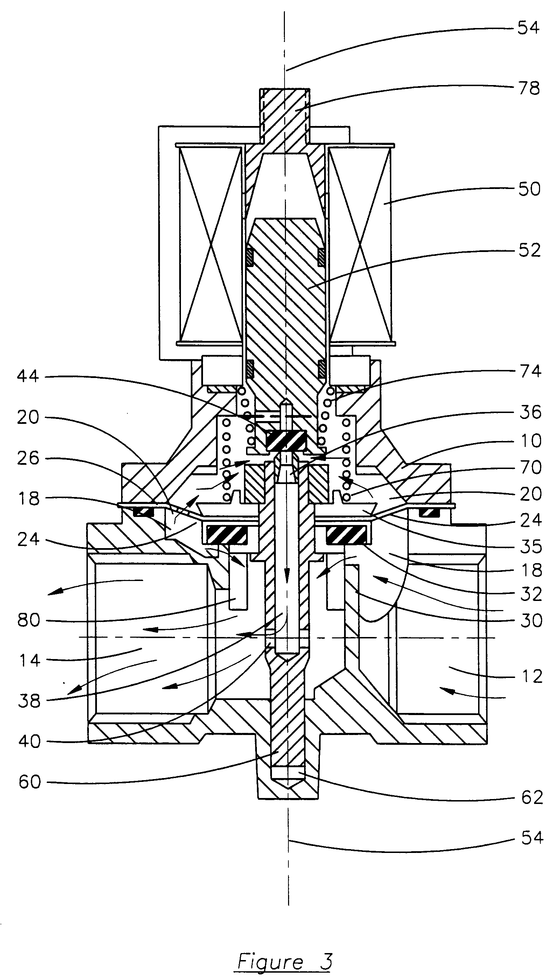

Figure 2 illustrates the structure of Figure 1 immediately after an upward magnetic force is exerted on the plunger 52 in response to an increase in electrical current flowing through the solenoid coil 50. It should be clearly understood that the relative positions of the components shown in Figure 2 lasts only an instant in time and those positions of the components quickly cause a reactionary change in position to the condition shown in Figure 3. In Figure 2, the plunger 52 has been raised in response to the magnetic attraction between the plunger 52 and the stop 78 that is caused by an increased electrical current flowing through the solenoid coil 50. This movement raises the second sealing means 44 away from the pilot orifice 36 and permits the pressure within the second cavity 20 to cause the fluid in the second cavity to flow through the pilot orifice 36, the conduit 38 and opening 40 toward the outlet port 14. This fluid flow is caused by the differential in pressure magnitude between the fluid in the second cavity 20, which had been generally equal to the pressure at the inlet port 12, and the pressure at the outlet port 14. As a result of this fluid flow through conduit 38 from the second cavity 20 to the outlet port 14, the pressure in the second cavity 20 is significantly reduced while the pressure in the first cavity 18 is maintained at the pressure of the inlet port 12. This pressure differential causes the diaphragm 24 to move upward and moves the main orifice seal 32 away from the crest of the main orifice. This upward force exerted on the diaphragm 24 is in opposition to the downward force provided by the main orifice spring 70. When the main orifice seal 32 moves away from the crest of the main orifice 30, fluid flow is permitted between the first cavity 18 and the outlet port 14.

With continued reference to Figure 2, the upward movement of the first sealing means 35 and the diaphragm 24 will cause the pilot orifice 36 to move toward the second sealing means 44. If the pilot orifice 36 moves into near contact with the second sealing means 44, flow through conduit 38 and opening 40 will be stopped and the pressure in the second cavity 20 will begin to rise as fluid flows through the bleed hole 26 from the first cavity 18. Depending on the spring constant of the main orifice spring, the relative magnitudes of the pressures as the inlet port 12 and the outlet port 14, the relative areas where the diaphragm 24 is affected by the pressures in the first cavity 18 and the second cavity 20 and the sizes the various orifice openings and conduits, the pilot orifice 36 will probably not maintain constant contact with the second sealing means 44 while the main orifice seal 32 is moved away from the crest of the main orifice 30. Instead, a slight gap will probably exist between the pilot orifice 36 and the second sealing means 44. This will result from a general force balance in the upward and downward directions along axis 54 in Figure 2 and a general equalization between the flow through the bleed hole 26 and the flow through the gap between the pilot orifice 36 and the second sealing means 44 which will continue through conduit 38 and opening 40 toward the outlet port 14. Therefore, it can be seen that the selection of a position of the plunger 52 along axis 54 will, in turn, select the position of the first sealing means 35 and the main orifice seal 32 along axis 54.

Figure 3 illustrates the proportional valve at an instant of time following the movement of the first sealing means 35 upward along axis 54 to place the pilot orifice 36 proximate the second sealing means 44. The position represented in Figure 3 would quickly follow the configuration illustrated in Figure 2 chronologically. When the components are in the positions represented in Figure 3, the first cavity 18 would contain a fluid at a pressure generally equal to or slightly less than the pressure of the fluid at the inlet port 12. The pressure of the fluid within the second cavity 20 would be less than the fluid in the first cavity 18, but slightly greater than the fluid pressure at the outlet port 14. These relative pressures will cause a slight fluid flow through the bleed hole 26 from the first cavity 18 to the second cavity 20 and will also cause a slight fluid flow from the second cavity 20 into the pilot orifice 36 and through the conduit 38 toward the outlet port 14. The relative position of the main orifice seal 33 relative to the main orifice 30 will be determined by the position of the plunger 52. The position of the plunger 52 will be determined by the current flowing through the solenoid coil 50 that creates a magnetic attraction between the plunger 52 and the stop 78 in opposition to the force provided by the plunger spring 74. When the position of the plunger 52 is thus selected, the position of the attached second sealing means 44 is also selected. The position of the second sealing means 44 will determine where the first sealing means moves 35 in response to the relative pressures within the first and second cavities, 18 and 20. When equilibrium is reached following a movement of the plunger 52, the flow through the openings in the alignment sleeve 18 that results by the relative movement of the main orifice seal 32 relative to the main orifice 30, will be determined as a function of the position of the plunger 52. As a result, it can be seen that the flow through the valve, from the inlet port 12 to the outlet port 14, can be controlled by changing the current flowing through the solenoid coil 50. The fluid flow through the valve is therefore proportional to the current through the solenoid coil 50.

In Figures 2 and 3, the arrows represent the direction of fluid flow. Figures 1, 2 and 3 represent a particularly preferred embodiment of the present invention in which a solenoid is used to control the movement of the plunger 52. However, it should be understood that alternative embodiments of the present invention are also within its scope.

## Claims

1. A proportional valve, comprising:
a) a valve body (10) having an inlet port (12) and an outlet port (14);
b) a first cavity (18), within said valve body, connected in fluid communication with said inlet port;
c) a second cavity (20) within said valve body;
d) a diaphragm (24) disposed between said first and second cavities, said diaphragm having a bleed hole (26) extending therethrough and connecting said first and second cavities in fluid communication with each other;
e) a main orifice (30) for connecting said first cavity in fluid communication with said outlet port;
f) first means (32, 35) for sealing said main orifice (30) and preventing fluid flow between said first cavity (18) and said outlet port (14), said first sealing means being attached to said diaphragm (24) for movement with said diaphragm along a first axis (54) relative to said main orifice (30);
g) a pilot orifice (36) extending through said first sealing means for connecting said second cavity (20) in fluid communication with said outlet port (14);
h) second means (44) for sealing said pilot orifice (36) and preventing fluid flow between said second cavity (20) and said outlet port (14), said second sealing means being movable relative to said first sealing means (32, 35); and
i) means (50) for causing said second sealing means (44) to move relative to said first sealing means (35).

2. The proportional valve of claim 1, further comprising:
means (80) for limiting the movement of said first sealing means (32, 35) to a path along said first axis (54).

3. The proportional valve of claim 1 or 2, wherein:
said causing means is a solenoid coil (50).

4. The proportional valve of claim 1, 2 or 3, wherein:
said second sealing means (44) is attached to a plunger (52) disposed within said solenoid coil (50).

5. The proportional valve of one of the preceding claims, further comprising:
first means (70) for urging said first sealing means (32, 35) against said main orifice (30) to prevent fluid flow between said first cavity (18) and said outlet port (14).

6. The proportional valve of claim 5, wherein:
said first urging means is a main orifice spring (70).

7. The proportional valve of one of the preceding claims, further comprising:
second means (74) for urging said second sealing means (44) against said pilot orifice (36) to prevent flow between said second cavity (20) and said outlet port (14).

8. The proportional valve of claim 7, wherein:
said second urging means is a plunger spring (74).
